# EUROPÄISCHE PATENTSCHRIFT

(11) **EP 0 596 418 B1**
(45) Veröffentlichungstag und Bekanntmachung des Hinweises auf die Patenterteilung: **18.08.1999**
(21) Anmeldenummer: 93117528.5
(22) Anmeldetag: 28.10.1993
(51) Int. Cl.: C09J 7/02

(54) **Rückstandsfrei wiederablösbares, flexibles Flächengebilde, Verfahren zu dessen Herstellung und dessen Verwendung**
Releasable flexible fabric, process for its production and use
Tissu flexible détachable, procédé pour sa production et son utilisation

(30) Priorität: 04.11.1992 DE 4237252
(43) Veröffentlichungstag der Anmeldung: 11.05.1994
(73) Patentinhaber: ZWECKFORM Büro-Produkte GmbH, D-83626 Valley (DE)
(72) Erfinder: Gottfried, Philipp, Dr., D-83607 Holzkirchen (DE); Zschaeck, Michael, D-81371 München (DE)
(74) Vertreter: Hansen, Bernd, Dr. Dipl.-Chem.

(56) Entgegenhaltungen:
- CH-A- 673 078
- DE-A- 3 433 293

## Beschreibung

Diese Erfindung betrifft rückstandsfrei wiederablösbare, flexible Flächengebilde, die auch erneut wieder verklebt werden können. Ebenso betrifft diese Erfindung ein Verfahren zu dessen Herstellung und günstige Verwendungsmöglichkeiten hierfür.

Rückstandsfrei wiederablösbare und auch erneut verklebbare, flexible Flächengebilde sind bereits seit langer Zeit bekannt und werden für Etiketten bzw. für Haftnotizzettel oder auch Klebebänder oder Schutzfolien verwendet.

Diese Flächengebilde lassen sich in folgende Gruppen einteilen.

Aus EP-B-0 149 135 ist ein rückstandsfrei wiederablösbares und erneut verklebbares haftklebriges Flächengebilde bekannt. Dieses weist kalottenförmige Haftstellen auf, wobei die Kalottenbasis auf dem Flächengebilde haftet. Der Basisdurchmesser liegt bei 30-600 µm. Der Haftkleber wird mit Hilfe einer Klebstoff-Dispersion mit einem Feststoffgehalt von mindestens 45 Gew-% auf das Flächengebilde aufgebracht. Die verwendete Dispersion kann eine wässrige Dispersion sein. Die Beschichtung erfolgt mit dem Siebdruck-, Tiefdruck- oder dem Tintenstrahlverfahren.

Aus DE-OS-3 805 223 ist ebenfalls ein rückstandsfrei wiederablösbares haftklebriges Flächengebilde mit kalottenförmigen Haftstellen bekannt. Gemäß dieser Lehre steigt die Anzahl der Haftstellen von mindestens 10/cm² auf höchstens 15000/cm² an. Damit ist es möglich, daß der Klebmasse-Auftrag von mindestens 1 g/m² auf höchstens 30 g/m² ansteigt. Auch bei dieser Druckschrift wird der Klebstoff mit Hilfe einer Klebstoff-Dispersion, die eine wässrige Dispersion sein kann, aufgebracht. Die Beschichtung erfolgt mit dem Siebdruck-, Tiefdruck- oder dem Tintenstrahlverfahren.

Die genannten, bekannten Verfahren weisen jedoch den Nachteil auf, daß der Klebstoff vor der Beschichtung in dispergierter Form vorliegt. Das Dispersionsmittel - egal ob Wasser oder ein anderes Mittel - muß nach dem Auftragen in einem anschließenden Verfahrensschritt entfernt werden. Dieser Verfahrensschritt bedingt entweder eine geringe Produktionsgeschwindigkeit oder eine lange Trockenstrecke. Weiterhin können bei diesem Trocknungsschritt thermische Verspannungen, z.B. bei einer Kunststoffolie als Substrat, oder unerwünschte Austrocknungsvorgänge das beschichtete Substrat negativ beeinflussen. Die Folgen sind z.B. eine mangelnde Planlage der fertigen Produkte.

Für die Herstellung von rückstandsfrei wiederablösbaren, flexiblen Flächengebilden ist ebenfalls die folgende Vorgehensweise bekannt.

Der Klebstoff wird zunächst vollflächig aufgetragen, wobei eine nur punktuelle Kontaktfläche zu dem mit dem Flächengebilde später zu beklebenden Substrat erreicht wird, oder in den Klebstoff nichthaftklebrige, elastische Kugeln eingebettet werden oder indem der Klebstoff selbst aus haftklebrigen, elastischen Kugeln besteht . In diesen Fällen kontaktieren lediglich die erhabenen Stellen das mit dem Flächengebilde zu beklebende Substrat.

Eine derartige Vorgehensweise ist beispielsweise aus DE-OS-3 537 433 bekannt, nach der die Klebeschicht nichthaftklebrige elastische Mikrokugeln und einen Klebstoff enthält, wobei ein bestimmtes Mischungsverhältnis dieser beiden Substanzen eingehalten werden muß.

Aus DE-PS 24 17 312 ist ein selbstklebendes Flächengebilde bekannt, bei dem das Substrat auf mindestens einer Seite Mikrokugeln aus einem Copolymer aus einem oleophilen, in Wasser emulgierbaren Alkylacrylatester und einem weiteren Monomer aufweist. Zwischen dem Substrat und den Mikrokugeln ist ein Bindemittel angeordnet, in dem die Mikrokugeln eingebettet sind und aus dessen freier Oberfläche sie herausragen.

Nachteilig bei den beschriebenen Verfahren ist, daß sie ziemlich aufwendig und umständlich sind, da immer dafür gesorgt werden muß, daß Teile der Klebstoffschicht bzw. die Mikrokugeln aus der Oberfläche des Klebers herausragen und somit die klebrige, punktuelle Kontaktfläche bilden können.

Ein weiterer Nachteil der Produkte, die nach all den oben beschriebenen Verfahren hergestellt werden, ist die niedrige Klebkraft (1 bis 2N/25mm, bezogen auf Glas als zu beklebendes Substrat). Insbesondere besteht bei Rundverklebungen z.B. auf Reagenzgläsern die Gefahr, daß eine Selbstablösung erfolgt.

Über all die oben beschriebenen Verfahren hinaus ist bekannt, die Haftfestigkeit des Klebstoffes sowie seine Wiederablösbarkeit durch die Chemie des Klebers selbst zu regeln. Die Klebstoffe - es können Haftschmelzklebstoffe, Lösungs- oder Dispersionsklebstoffe sein - werden in der Regel vollflächig aufgetragen mit üblicherweise zwischen 15 und 25 g/m² Flächenbeschichtung (Trockengewicht). Dies hat den Nachteil, daß sich eine ziemlich hohe Klebstoffmenge auf dem Substrat befindet. Werden diese Klebstoffe lediglich punktförmig und nicht vollflächig aufgetragen, so kann zwar die Klebstoffmenge und damit das -flächengewicht eingespart werden, jedoch ergibt sich im Zusammenhang damit auch eine Verminderung der Klebkraft. Dies führt wiederum zu einer deutlichen Einschränkung der Verwendbarkeit dieser Flächengebilde. Insbesondere scheiden Anwendungen unter Bedingungen, die eine höhere Zug- oder Scherbelastung der Flächengebilde beinhalten, aus.

Dieser Erfindung lag daher die Aufgabe zugrunde, rückstandsfrei wiederablösbare, flexible Flächengebilde zur Verfügung zu stellen, wobei die Klebstoffmenge vermindert werden kann und gleichzeitig die Klebkraft nicht nachteilig beeinflußt wird. Außerdem sollen ein Verfahren zur Herstellung solcher Flächengebilde sowie günstige Verwendungsmöglichkeiten für diese angegeben werden.

Dieses Ziel wird erfindungsgemäß durch ein rückstandsfrei wiederablösbares, flexibles Flächengebilde der eingangs genannten Art erreicht, das dadurch gekennzeichnet ist, daß als Haftkleber ein Schmelzkleber verwendet wird, der rasterförmig auf dem Substrat aufgebracht ist und eine auf dem Substrat haftende Basis aufweist, wobei der Schmelzkleber vor der Beschichtung nicht in einem Trägersystem vorlag bzw. ohne Trägersystem aufgebracht wurde.

Mit dem Ausdruck "der Schmelzkleber lag nicht in einem Trägersystem vor" ist hier gemeint, daß der Schmelzkleber nicht dispergiert oder emulgiert ist und damit nicht in Form einer Dispersion, Emulsion, eines Organosols oder eines Plastisols für die Beschichtung verwendet wird. Der Schmelzkleber kann als solcher jedoch Additive enthalten, z.B. Weichmacher, Stabilisatoren oder ähnliche Stoffe, wie es später noch detaillierter erläutert wird.

Es wurde überraschenderweise festgestellt, daß ein Flächengebilde, das mit einer Schmelzkleberschicht rasterförmig beschichtet ist, eine hervorragende Klebkraft aufweist, wobei zugleich durch den punktförmigen Auftrag die Klebstoffmenge verhältnismäßig gering gehalten werden kann.

Das erfindungsgemäße Flächengebilde zeichnet sich insbesondere durch seine rückstandsfreie Wiederablösbarkeit aus. Als rückstandsfrei sind die Flächengebilde anzusehen, die nach dem Ablösen einen Rückstand zeigen, der einen Flächendeckungsgrad von weniger als 0,1% / 625 mm² ursprünglich beklebter Fläche erreicht. Die rückstandsfreie Wiederablösbarkeit hängt neben Ablösewinkel und -geschwindigkeit von der Art des Klebstoffes, dem jeweils verwendeten Raster und der Art des Substrates, und sich daraus ergebend von der Adhäsion Flächengebilde zum Substrat ab. Ideale Prüfsubstrate dafür sind Fensterund Plexiglas sowie Stahl, Substrate mit vergleichsweise hohen Adhäsionskräften zu Flächengebilden mit Schmelzklebstoffen.

Die Überprüfung der Rückstandsfreiheit kann nach einer Vorgehensweise erfolgen, die später im Zusammenhang mit den Beispielen erläutert wird.

Das erfindungsgemäße Flächengebilde zeichnet sich dadurch aus, daß es auf eines der Substrate, die oben erwähnt sind, geklebt und von diesem mit einer Geschwindigkeit von bis zu 1000 mm/s abgezogen werden kann und sich dabei unabhängig vom Ablösewinkl keine Rückstände im obigen Sinne bilden.

Durch den rasterförmigen und vorzugsweise punktförmigen Auftrag des Schmelzklebers bildet sich eine kalottenförmige Haftstelle, deren Basis mit dem Substrat verbunden ist. Eine besonders hohe Klebkraft und dennoch rückstandsfreie Wiederablösbarkeit, unabhängig von Ablösewinkel und- geschwindigkeit, kann erhalten werden, wenn ein Verhältnis der Basisfläche eines Schmelzkleberpunktes zu dessen Höhe in dem Bereich von 5:1 bis 30:1 und vorzugsweise von 10:1 bis 25:1 eingehalten wird. Durch die erfindungsgemäße Vorgehensweise wird eine Haftkraft von 2,5 bis 10 N/25 mm erreicht.

Die erfindungsgemäß verwendbaren Schmelzkleber umfassen:
a) thermoplastische Rückgratpolymere;
b) ggf. Klebharze;
c) ggf. Weichmacher;
d) ggf. viskositätserniedrigende Mittel;
e) ggf. Stabilisatoren; und
f) ggf. Füllstoffe.

Alle thermoplastischen Polymere (a) und deren Gemische mit den Komponenten (b) bis (f) sind hierfür verwendbar.

Geeignete thermoplastische Rückgratpolymere sind z.B. natürlicher Kautschuk; synthetischer Kautschuk wie SBS, SIS, SEBS (Styrol/Ethylen/Butadien/Styrol), SEPS (Styrol/Ethylen/Propylen/Styrol) (Triblockcopolymere) und S-B, S-I, S-EP (Diblockcopolymere); Polyolefine wie ataktisches PP, Ethylen-Propylen-Butadien-Copolymer; Polyacrylate wie Polybutylacrylsäureester, Poly (2-ethylhexylacrylsäureester), Polymethacrylsäureester und deren Copolymere mit z.B. Acrylsäure, Methacrylsäure, Vinylacetat, Maleinsäureanhydrid, Diacetonacrylamid oder Acrylnitril; Polyvinylderivate wie Ethylen-Vinylacetat-Copolymer, (1-Vinyl-2-pyrrolidon) -Vinylacetat-Copolymer, Vinylacetat-Vinyllaurat-Copolymer; Polyamide wie Diethylentriaminpolyamid; Copolyamide; Polyester; Copolyester; Copolyetherester; Polyurethane; Silicone. Diese Rückgratpolymere können als Copolymerisate oder als Gemische untereinander, vollständig vernetzt oder UV- oder ESH-nachvernetzbar eingesetzt werden.

Geeignete Klebharze sind z.B. aliphatische, alicyclische und aromatische Kohlenwasserstoffe; Polyterpene; Kolophoniumester wie Kolophonium-Glycerin-Ester, hydrierter Kolophonium-Pentaerythrit- Ester, polymerisierte Kolophonium-Diethylenglykol- Ester; polymerisiertes Kolophonium.

Geeignete Weichmacher sind z.B. Phthalate wie Diethylphthalat, Dioctylphthalat, Diisodecylphthalat; Phosphate wie Tributylphosphat, Triphenylphosphat; Dioctyladipat; Dioctylsebacat; Dibutylmaleat.

Geeignete viskositätserniedrigende Additive sind z.B. aliphatische, alicyclische und aromatische Kohlenwasserstoffe; flüssiges Polybuten; flüssiges Polystyrol; Xylol-Formaldehyd-Harze; Cumaron-Inden-Harze.

Geeignete Stabilisatoren sind z.B. Tetrakis [methylen-3-(3',5'-di-tert.butyl-4'-hydroxyphenyl)propionat]methan; 1,3,5-Trimethyl-2,4,6-tris(3,5-di-tert.butyl-4-hydroxy-benzyl)benzol; 4,4'-Thiobis(6-tert.butyl-m-kresol); Zink-dibutyldithiocarbamat; Dibutylthioharnstoff; Octylphenylsalicylat; 2-Hydroxy-4-(2-hydroxy-3-methacryloxy)propiobenzophenon; Octa-decyl-3-(3',5'-di-tert.butyl-4'-hydroxyphenyl)propionat.

Geeignete Füllstoffe sind z.B. mineralische Stoffe wie Kaolin oder Talk.

Bevorzugte Schmelzklebstoffe sind solche, deren thermoplastische Rückgratpolymere strahlenvernetzbar sind, z.B. durch UV- oder Elektronenstrahlung. Geeignete thermoplastische Rückgratpolymere sind z.B. Acrylate; Polyesteracrylate; synthetische Kautschuke. Der strahlenvernetzbare Schmelzklebstoff wird auf das Substrat des Flächengebildes aufgebracht und dann erst strahlengehärtet. Gegenüber nicht-nachvernetzbaren Schmelzklebstoffen zeichnen sich die strahlenvernetzbaren Schmelzklebstoffe durch eine merklich höhere Temperaturbeständigkeit aus. Vorzugsweise weist der Schmelzkleber nach der Strahlenvernetzung einen Schmelzbereich von 120 bis 250 °C und einen Erweichungsbereich von 50 bis 180 °C auf.

Bevorzugt sind Schmelzkleber mit einer Viskosität von etwa 1000 bis 80000 mPas bei einer Verarbeitungstemperatur von 100 bis 160°C.

Die Klebstoffmenge ist geringer als die bei einem üblichen vollflächigen Auftrag und liegt bei 3 bis 15 g/m², vorzugsweise 6 bis 10 g/m². Der Auftrag des Schmelzklebers auf das zu beschichtende Substrat kann in einem Punktraster von 100 bis 22500 Punkten/ 625 mm², besonders bevorzugt von 1600 bis 10000 Punkten/625 mm² erfolgen.

Für den Schmelzkleber ist eine Flächenbedeckung von 10 bis 85 %, insbesondere 30 bis 60 %, vorzuziehen.

Das mit dem Schmelzkleber zu beschichtende Flächengebilde ist vorzugsweise ein Etikettenmaterial; es kann aus Papier, Karton, einer Kunststoff- oder Metallfolie oder aus Textil bestehen. Die Kunststoffolie ist z.B. aus Polyvinylchlorid, Polystyrol, Polyolefinen, Polyestern, Polyurethanen oder Cellulosederivaten hergestellt. Das zu beschichtende Flächengebilde weist vorzugsweise eine Dicke von 10 bis 1000 µm und ein Basisgewicht von 10 bis 500 g/m² auf.

Allgemein ausgedrückt können die flexiblen Flächengebilde den in den Figuren 1 bis 3 gezeigten Aufbau haben. In Fig. 1 besteht das Flächengebilde aus einem Etikettenmaterial, dem darauf aufgebrachten Schmelzkleber und einem Träger- bzw. Trennmaterial. Das Träger- bzw. Trennmaterial kann aus Papier, Karton, einer Kunststoff- oder Metallfolie oder aus Textil bestehen. Gemäß Fig. 2 sind zwei jeweils mit Schmelzkleber versehene Etikettenmaterialien auf den beiden Seiten eines Träger- bzw. Trennmaterials angebracht. Erfindungsgemäß ist es auch möglich, ein Etikettenmaterial auf beiden Seiten mit Schmelzkleber zu versehen, wobei die Schmelzkleberschichten wiederum mit Träger- bzw. Trennmaterial abgedeckt werden (Fig. 3).

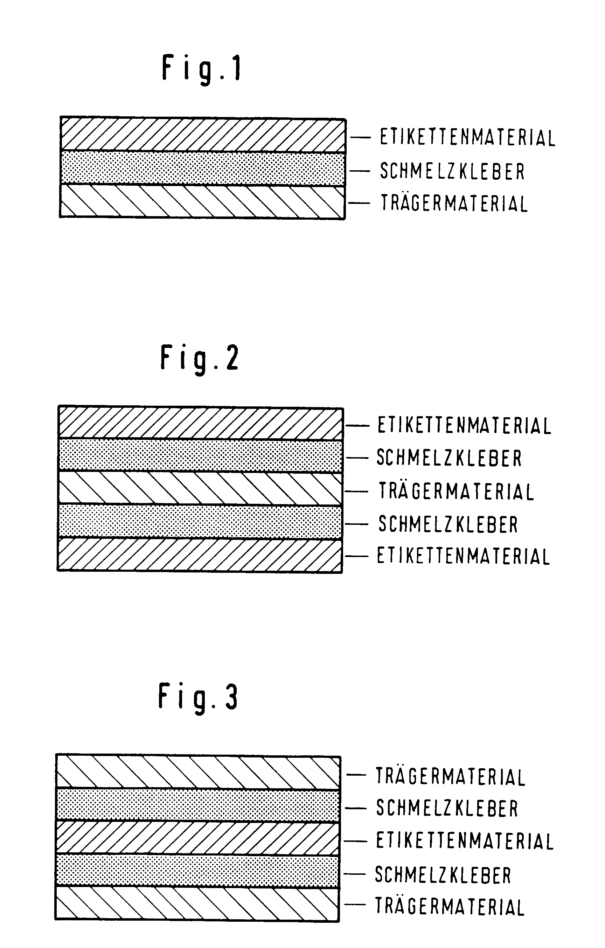

In den Fällen gemäß Fig. 2 und 3 können die beiden Klebstoffschichten aus verschiedenen Schmelzklebern bestehen und verschiedene Raster aufweisen. Ebenso können im Fall der Fig. 2 die beiden Etikettenmaterialien und im Fall der Fig. 3 die beiden Träger-bzw. Trennmaterialien verschieden sein.

Erfindungsgemäß sind die folgenden Verwendungsmöglichkeiten für das flexible Flächengebilde bevorzugt:
- Selbstklebende Etiketten wie EDV-Etiketten, z.B. Kopier- und Computeretiketten (Laser-, Ink Jet-, Thermo-, Thermotransfer- und Matrixdrucketiketten); Frankier-Etiketten; Büro-Etiketten z.B. Adress-Etiketten; Preis- Etiketten; Organisations-, Transport-/Lagersteuerungs-Etiketten; Kennzeichnungs-Etiketten, z.B. Typenschilder, Hinweis-Etiketten, Gebrauchsanweisungen, Plakate; Produktausstattungs-Etiketten, z.B. Flaschen-Etiketten; Schmuck-Etiketten, z.B. Sticker, Fensterdekor-Etiketten, Dekorfolien; Promotion-Etiketten; Haushalts-Etiketten; IndikatorEtiketten.
- Montagehilfen, wie Fotoetiketten; Fixieretiketten im Apparabau für Klischees; Fixieretiketten zum Verlegen von Teppichböden; Fixieretiketten zum Einkleben von Spiegeln in Puderdosen.
- Beschriftungsschablonen
- Selbstklebendes Fotopapier
- Selbstklebebänder, wie Büro-Klebebänder; Haushalts-Klebebänder; Verpackungs-Klebebänder; Isolier-Klebebänder; Abdeck-Klebebänder; Kantenumleimer; Transferbänder; Schaumstoffbänder
- Haftnotizen
- Selbstklebende Formulare, wie Durchschreibeformulare, Drucksachen
- Kuverts
- Schutzfolien/Überzüge, wie Tapeten, Möbelüberzüge; Dichtungs- und Abschirmfolien aus Metall; Dachbahnen
- Verschluß-Etiketten, wie Beutelverschluß-Etiketten; Ventil-Etiketten; Selbstklebende Filter; Windelverschlüsse
- Medizinische Pflaster, wie Heilpflaster, Rheumapflaster; Wundverbände
- Slipeinlagen
- Selbstklebende Textile, wie Tapeten; Wandbezüge; Teppichfliese; Filze

Erfindungsgemäß wird auch ein Verfahren zur Herstellung des oben genannten Flächengebildes angegeben, wobei das Substrat mit dem Schmelzkleber durch ein Siebdruckverfahren, ein Tiefdruckverfahren oder Flexodruckverfahren beschichtet wird. Bei dem Siebdruckverfahren kann mit einem Flachsieb oder einem Rundsieb gearbeitet werden. Für den Flexodruck kommen Drei-Walzenverfahren zum Einsatz, wobei die Walzen beheizt werden. Möglich ist dabei ebenso, anstelle von Abquetschwalzen Rakel zu verwenden. Bei dem Tiefdruckverfahren können die reinen NäpfchenRakelsysteme oder Näpfchen-Walzensysteme eingesetzt werden. Die Auftragssysteme können als geschlossene oder als offene Systeme vorliegen. All diesen Verfahren ist gemeinsam, daß das Substrat, das mit dem Schmelzkleber beschichtet werden soll, zwischen einer Gegendruckwalze und dem Druckkörper, der den Leim aufbringt, durchgeführt wird. Die Punktfrequenz sowie die Größe der Schmelzkleberpunkte kann durch einen variablen, separaten Druckkörper oder aber entweder direkt durch das Sieb beim Siebdruck, die Näpfchen-Walze beim Tiefdruck oder die Rasterwalze beim Flexodruck gesteuert werden.

Der Schmelzkleber wird in purer Form aufgebracht, wobei der Schmelzkleber als solcher die oben genannten Additive enthalten kann und gegebenenfalls durch UV- oder Elektronenstrahlung nachvernetzt werden kann. Die Auftragsmenge liegt bei 3 bis 15 g/m², vorzugsweise 6 bis 10g/m².

Das Verhältnis der Basisfläche zu der Punkthöhe der Schmelzkleberpunkte hängt zum einen von den rheologischen Eigenschaften wie z.B. von der Strukturviskosität, Thixotropie und der Fließfähigkeit des verwendeten Schmelzklebers ab. Zum anderen kann das genannte Verhältnis von Basisfläche zur Punkthöhe z.B. bei der Verwendung eines Siebes durch das Verhältnis von Lochdurchmesser zu Wandstärke des verwendeten Siebes beeinflußt werden.

Erfindungsgemäß wird der Schmelzkleber vorzugsweise unter Verwendung einer Rotationssiebdruckanlage aufgebracht. Besonders günstig läßt sich das vorteilhafte Verhältnis von Basisfläche zur Punkthöhe einstellen, wenn das in der Rotationssiebdruckanlage verwendete Sieb eine Wandstärke von 85 bis 170 µm und einen Durchlaß für den Schmelzkleber von zirka 10 bis 45% aufweist. Vorzugsweise wird ein Sieb mit 1600 bis 10000 Löchern/625 mm² verwendet. Bei Verwendung eines derartigen Siebes ist es auch vorteilhaft, wenn die in der Anlage verwendete Gegendruckwalze mit einer thermischen Regelung versehen ist. Die notwendige Temperatur der Gegendruckwalze ergibt sich unter anderen aus dem Erweichungs- und dem Schmelzbereich des verwendeten Schmelzklebers, der Produktionsgeschwindigkeit und der Haftfestigkeit des Schmelzklebstoffes zum Sieb in Abhängigkeit von der Temperatur sowie der Viskosität des Schmelzklebstoffes. Bevorzugt sind ein Schmelzbereich von 80 bis 250°C und ein Erweichungsbereich von 30 bis 180°C.

Mit Hilfe der genannten Parameter ist es möglich, den Schmelzkleber in besonders günstiger Weise auf das Substrat aufzubringen, wobei insbesondere das genannte Verhältnis von Basisfläche zur Punkthöhe eingestellt werden kann.

Nachfolgend wird diese Erfindung durch Beispiele noch näher erläutert.

### Beispiel 1

Es wird ein Papier, 60g, holzfrei, weiß, maschinenglatt, in einer Rotationssiebdruckanlage unter Verwendung eines Siebes mit einer Wandstärke von 130 µm, einem Durchlaß von 10% und 1600 Löchern/625 mm² mit einem Schmelzkleber beschichtet. Der verwendete Schmelzkleber ist PS 5002 der Firma Novamelt Research GmbH (ein SIS (Styrol/Isopren/Styrol)-Blockcopolymer, abgemischt mit einem Klebharz im Verhältnis 1:1). Dieser Schmelzkleber weist einen Schmelzpunkt von 120°C auf. Seine Viskosität beträgt bei 150°C 49500 mPas.

Mit einer Produktionsgeschwindigkeit von 80 m/min und einer Temperatur der Gegendruckwalze zwischen 110 und 115°C, vorzugsweise 112 bis 113°C, wird das Substrat rasterförmig beschichtet. Die Klebstoffmenge liegt bei 6 g/m². Das Verhältnis von Basisfläche zur Höhe des Schmelzkleberpunktes ist 20:1. Das so hergestellte Etikettenmaterial weist eine Haftkraft von 4,3 N/25mm auf Fensterglas auf, gemessen nach der Finat-Prüfmethode FTM1 (FTM: Finat Test Method). Wird ein solches Etikettenmaterial auf ein anderes Substrat wie z.B. Fensterglas geklebt, so kann dieses auch rückstandsfrei wiederabgelöst werden.

Die Rückstandsfreiheit läßt sich wie folgt überprüfen:

Auf eine zuvor gereinigte Glasplatte wird mit einer Finat-Standardanpreßrolle ein Etikett aufgewalzt. Das Etikett wird nach FTM1 abgezogen. Anschließend wird die Kontaktstelle des Etiketts mit der Platte (mindestens 625 mm²) über ein Bildverarbeitungssystem abgescannt. Mit Hilfe des Bildverarbeitungssystems können Zahl und Größe der Klebstoffrückstände (als schwarze Flächengebilde) erfaßt werden. Der so erkennbare Flächendeckungsgrad ergibt einen unmittelbaren Bezug zur Rückstandsfreiheit. Als rückstandsfrei sind die Materialien anzusehen, die einen Flächendeckungsgrad des übertragenen Klebstoffes von weniger als 0,1% / 625 mm² ursprünglich beklebter Fläche erreichen.

Die Überprüfung der Lagerungsbeständigkeit erfolgt durch eine künstliche Alterung über einen Zeitraum von insgesamt 72 Stunden. Diese findet bei den in der nachfolgenden Tabelle angegebenen Temperaturen und Feuchtigkeiten (in %) für die jeweils angegebenen Zeitspannen (z.B. 6h bei 40°C und einer Feuchtigkeit von 80% rel.) statt, wobei der Test 3 mal, insgesamt demnach 72 h, durchlaufen wird.

| **KÜNSTLICHE ALTERUNG** ZYKLUS 1 | | |
|---|---|---|
| Zeit in h | Temperatur (°C) | RF (%) |
| 2 | 22 | 45 |
| 2 | 70 | 80 |
| 2 | 70 | 10 |
| 6 | 40 | 80 |
| 2 | 22 | 45 |
| 2 | 70 | 80 |
| 2 | 70 | 10 |
| 6 | 23 | 50 |

Dabei behält das Etikettenmaterial seine oben genannt sehr gute Haftkraft bei.

### Beispiel 2

Es wird ein Papier, 60 g, holzfrei, weiß, maschinenglatt, in einer Rotationssiebdruckanlage unter Verwendung eines Siebes mit einer Wandstärke von 130 µm, einem Durchlaß von 10% und 1600 Löchern/625 mm² mit einem strahlenvernetzbaren Schmelzkleber beschichtet. Der verwendete Schmelzkleber ist Dynacoll A 3355 der Firma Hüls AG (ein Copolyester mit partiell endständigen Acrylat-Doppelbindungen), abgemischt mit 1,5 Gew.% des Photoinitiators Daro Cur 1173 der Firma Ciba Geigy. Dieser Schmelzkleber weist eine Viskosität von 8500 mPas bei 100°C auf.

Mit einer Produktionsgeschwindigkeit von 20 m/min und einer Temperatur der Gegendruckwalze zwischen 80 und 85°C, vorzugsweise 82 bis 83°C, wird das Substrat mit dem 120°C warmen Schmelzklebstoff rasterförmig beschichtet. Sofort nach der Beschichtung wird der rasterförmig aufgetragene Schmelzklebstoff mit einer UV-Lampe der Wellenlänge 200nm in 4cm Abstand von der Substratbahn belichtet.

Die aufgetragene Klebstoffmenge liegt bei 10g/m². Das Verhältnis von Basisfläche zur Höhe des Schmelzkleberpunktes ist 25:1. Das so hergestellte Etikettenmaterial weist eine Haftkraft von 6,4 N/25 mm auf Fensterglas auf, gemessen nach der Finat-Prüfmethode FTM 1 (FTM: Finat Test Method). Wird ein solches Etikettenmaterial auf ein Substrat wie z.B. Fensterglas geklebt, so kann es auch rückstandsfrei wiederabgelöst werden.

Die Überprüfung der Temperaturbeständigkeit zeigt, daß die Rasterpunktform nach 5 min Lagerung bei 150°C unverändet ist. Unter diesen Lagerungsbedingungen bleiben auch das Verhältnis von Basisfläche zur Höhe des Schmelzkleberpunktes nahezu unverändert bei 25:1, die Haftkraft auf Fensterglas nach Abkühlen auf Raumtemperatur unverändert bei 6,1 N/25 mm und die rückstandsfreie Wiederablösbarkeit des Etikettenmaterials z.B. von Fensterglas nach Abkühlen des Verbundes auf Raumtemperatur.

## Patentansprüche

1. Rückstandsfrei wiederablösbares, flexibles Flächengebilde mit einem Substrat und einer mindestens auf eine Seite aufgebrachten Haftkleberschicht, **dadurch gekennzeichnet,** daß der Haftkleber ein Schmelzkleber ist, der rasterförmig aufgebracht ist und eine auf dem Substrat haftende Basis aufweist, der Schmelzkleber bei der Beschichtung nicht in einem Trägersystem vorliegt, und daß das Verhältnis der Basisfläche eines Schmelzkleberpunktes zur Höhe des Schmelzkleberpunktes in dem Bereich von 5:1 bis 30:1 liegt, wobei die rückstandsfreie Wiederablösbarkeit von einem silikonisiertem Trägerpapier ausgeschlossen ist.

2. Flächengebilde nach Anspruch 1, **dadurch gekennzeichnet,** daß das Verhältnis von Basisfläche zur Höhe des Schmelzkleberpunktes von 10:1 bis 25:1 ist.

3. Flächengebilde nach Anspruch 1 oder 2, **dadurch gekennzeichnet,** daß der Schmelzkleber punktförmig aufgebracht ist.

4. Flächengebilde nach einem der Ansprüche 1 bis 3, **dadurch gekennzeichnet,** daß der Schmelzkleber ein natürlicher Kautschuk, synthetischer Kautschuk, Polyolefin, Poly(meth)acrylat, Polyvinylderivat oder ein Copolymer davon, ein Polyamid, Copolyamid, Polyester, Copolyester, Copolyetherester, Polyurethan oder Silicon oder eine Mischung daraus ist.

5. Flächengebilde nach einem der Ansprüche 1 bis 4, **dadurch gekennzeichnet,** daß der Schmelzkleber ein Klebharz, einen Weichmacher, ein viskositätserniedrigendes Mittel, einen Stabilisator und/oder einen Füllstoff enthält.

6. Flächengebilde nach einem der Ansprüche 1 bis 5, **dadurch gekennzeichnet,** daß der Schmelzkleber einen Schmelzbereich von 80°C bis 250°C und einen Erweichungsbereich von 30°C bis 180°C aufweist.

7. Flächengebilde nach einem der Ansprüche 1 bis 5, **dadurch gekennzeichnet,** daß der Schmelzkleber durch UV- oder Elektronenstrahlung strahlenvernetzbar ist.

8. Flächengebilde nach Anspruch 7, **dadurch gekennzeichnet,** daß der Schmelzkleber nach der Strahlenvernetzung einen Schmelzbereich von 120 bis 250°C und einen Erweichungsbereich von 50 bis 180°C aufweist.

9. Flächengebilde nach einem der Ansprüche 1 bis 8, **dadurch gekennzeichnet,** daß der Schmelzkleber in einem Raster von 100 bis 22500 Punkten/625mm² aufgebracht ist.

10. Flächengebilde nach einem der Ansprüche 1 bis 9 **dadurch gekennzeichnet,** daß der Schmelzkleber in einem Flächengewicht von 3 bis 15 g/m² auf das Substrat aufgebracht ist.

11. Flächengebilde nach einem der Ansprüche 1 bis 10, **dadurch gekennzeichnet,** daß der Schmelzkleber mit einer Flächenbedeckung von 10 bis 85 % auf das Substrat aufgebracht ist.

12. Flächengebilde nach Anspruch 11, **dadurch gekennzeichnet,** daß das Substrat ein Papier, Karton, eine Kunststoff- oder Metallfolie oder ein Textil ist.

13. Flächengebilde nach einem der Ansprüche 1 bis 12, **dadurch gekennzeichnet,** daß das Substrat eine Dicke von 10 bis 1000 µm aufweist.

14. Flächengebilde nach einem der Ansprüche 1 bis 13, **dadurch gekennzeichnet,** daß es eine Klebkraft auf Fensterglas von 2,5 bis 10 N/25 mm aufweist.

15. Flächengebilde nach einem der Ansprüche 1 bis 14, **dadurch gekennzeichnet,** daß es mit einem Rückstand von weniger als 0,1% pro 625mm² Flächendeckungsgrad der beklebten Fläche von dem zu beklebenden Substrat ablösbar ist, wobei das zu beklebende Substrat Fenster- oder Plexiglas oder Stahl ist.

16. Verfahren zur Herstellung eines Flächengebildes nach einem der Ansprüche 1 bis 15, **dadurch gekennzeichnet,** daß das Substrat mit dem Schmelzkleber durch Tiefdruck, Siebdruck oder Flexodruck beschichtet wird.

17. Verwendung eines flexiblen Flächengebilde nach einem der Ansprüche 1 bis 15 als selbstklebende Etiketten, Montagehilfen, Beschriftungsschablonen, Fotopapier, Formulare, Textile; als Haftnotizen, Selbstklebebänder, Kuverts, Schutzfolien, Überzüge, medizinische Pflaster und Slipeinlagen.

18. Verwendung nach Anspruch 17, wobei die selbstklebenden Etiketten EDV-, Frankier-, Büro-, Preis-, Kennzeichnungs-, Produktausstattungs-, Promotion-, Schmuck-, Haushalts-, Verschluß- und Indikatoretiketten sind.

19. Verwendung nach Anspruch 17, wobei die Selbstklebebänder Büro-, Haushalts-, Verpackungs-, Isolier-, Abdeckklebebänder, Transfer- und Schaumstoffbänder sind.

## Claims

1. Residue-free re-peelable, flexible surface structure having a substrate and an adhesive layer applied at least to one side, characterised in that the adhesive is a melt adhesive, which is applied in grid form and has a base adhering to the substrate, the melt adhesive not being present in a carrier system during coating, and in that the ratio of the base surface area of a melt adhesive dot to the height of the melt adhesive dot is in the range from 5:1 to 30:1, the residue-free re-peelability from a siliconised support paper being excluded.

2. Surface structure according to claim 1, characterised in that the ratio of base surface area to the height of the melt adhesive dot is from 10:1 to 25:1.

3. Surface structure according to claim 1 or 2, characterised in that the melt adhesive is applied in dot form.

4. Surface structure according to one of claims 1 to 3, characterised in that the melt adhesive is a natural rubber, synthetic rubber, polyolefin, poly(meth)acrylate, polyvinyl derivative or a copolymer thereof, a polyamide, copolyamide, polyester, copolyester, copolyether ester, polyurethane or silicone or a mixture thereof.

5. Surface structure according to one of claims 1 to 4, characterised in that the melt adhesive contains an adhesive resin, a plasticiser, a viscosity-reducing agent, a stabiliser and/or a filler.

6. Surface structure according to one of claims 1 to 5, characterised in that the melt adhesive has a melting range from 80°C to 250°C and a softening range from 30°C to 180°C.

7. Surface structure according to one of claims 1 to 5, characterised in that the melt adhesive can be radiation-cross-linked by UV radiation or electron radiation.

8. Surface structure according to claim 7, characterised in that after radiation-cross-linking the melt adhesive has a melting range from 120 to 250°C and a softening range from 50 to 180°C.

9. Surface structure according to one of claims 1 to 8, characterised in that the melt adhesive is applied in a grid of 100 to 22,500 dots/625 mm².

10. Surface structure according to one of claims 1 to 9, characterised in that the melt adhesive is applied to the substrate at a weight per unit area of 3 to 15 g/m².

11. Surface structure according to one of claims 1 to 10, characterised in that the melt adhesive is applied to the substrate having surface coverage of 10 to 85 %.

12. Surface structure according to claim 11, characterised in that the substrate is a paper, cardboard, a plastic film or metal foil or a textile.

13. Surface structure according to one of claims 1 to 12, characterised in that the substrate has a thickness of 10 to 1,000 µm.

14. Surface structure according to one of claims 1 to 13, characterised in that it has an adhesive force on window glass of 2.5 to 10 N/25 mm.

15. Surface structure according to one of claims 1 to 14, characterised in that it can be peeled from the substrate to be adhered with a residue of less than 0.1 % per 625 mm² degree of surface coverage for the adhered surface, the substrate to be adhered being window glass or plexiglass or steel.

16. Process for producing a surface structure according to one of claims 1 to 15, characterised in that the substrate is coated with the melt adhesive by gravure printing, screen printing or flexographic printing.

17. Use of a flexible surface structure according to one of claims 1 to 15 as self-adhesive labels, installation aids, labelling stencils, photographic paper, forms, textiles; as adhesive notes, self-adhesive tapes, envelopes, protective films, coatings, medical plasters and panty liners.

18. Use according to claim 17, wherein the self-adhesive labels are EDP, franking, office, price, identifying, product equipment, promotion, jewellery, household, closure and indicator labels.

19. Use according to claim 17, wherein the self-adhesive tapes are office, household, packaging, insulating, masking adhesive tapes, transfer and cellular material tapes.

## Revendications

1. Tissu flexible, redésolidarisable sans l'effet de dépôt, avec un substrat et une couche d'adhésif appliquée sur au moins une face, caractérisé en ce que l'adhésif est un adhésif à fusion, appliqué selon une trame et présentant une base adhérant sur le substrat, l'adhésif à fusion lors du revêtement ne se présentant pas en un système support, et le rapport entre la surface de base d'un point d'adhésif à fusion et la hauteur du point d'adhésif à fusion étant situé dans la plage allant de 5:1 à 30:1, la possibilité de redésolidarisation exempte de dépôt étant exclu d'un papier support siliconé.

2. Tissu selon la revendication 1, caractérisé en ce que le rapport entre la surface de base et la hauteur du point d'adhésif à fusion est compris dans la plage de 10:1 à 25:1.

3. Tissu selon la revendication 1 ou 2, caractérisé en ce que l'adhésif à fusion est appliqué sous forme de points.

4. Tissu selon l'une des revendications 1 à 3, caractérisé en ce que l'adhésif à fusion est un caoutchouc naturel, un caoutchouc synthétique, une polyoléfine, un poly(méth)acrylate, un dérivé de polyvinyle ou un copolymère de ceux-ci, un polyamide, un copolyamide, un polyester, un copolyester, un copolyétherester, un polyuréthane ou un silicone, ou bien un mélange de ceux-ci.

5. Tissu selon l'une des revendications 1 à 4, caractérisé en ce que l'adhésif à fusion contient une résine adhésive, un plastifiant, un agent d'abaissement de la viscosité, un stabilisateur et/ou une charge.

6. Tissu selon l'une des revendications 1 à 5, caractérisé en ce que l'adhésif à fusion présente une plage de fusion de 80°C à 250°C et une plage d'amollissement de 30°C à 180°C

7. Tissu selon l'une des revendications 1 à 5, caractérisé en ce que l'adhésif à fusion est réticulable par irradiation, au moyen d'un rayonnement UV ou d'électrons.

8. Tissu selon la revendication 7, caractérisé en ce que l'adhésif à fusion présente, après réticulation par irradiation, une plage de fusion de 120 à 250°C et une plage d'amollissement de 50 à 180°C.

9. Tissu selon l'une des revendications 1 à 8, caractérisé en ce que l'adhésif à fusion est appliqué en suivant une trame de 100 à 22500 points/625 mm².

10. Tissu selon l'une des revendications 1 à 9, caractérisé en ce que l'adhésif à fusion est appliqué sur le substrat selon un poids surfacique de 3 à 15 g/m².

11. Tissu selon l'une des revendications 1 à 10, caractérisé en ce que l'adhésif à fusion est appliqué sur le substrat avec un recouvrement de surface de 10 à 85 %.

12. Tissu selon la revendication 11, caractérisé en ce que le substrat est un papier, un carton, une feuille de matière plastique ou de métal ou un textile.

13. Tissu selon l'une des revendications 1 à 12, caractérisé en ce que le substrat est d'une épaisseur de 10 à 1000 µm.

14. Tissu selon l'une des revendications 1 à 13, caractérisé en ce qu'il présente un pouvoir d'adhésion sur un vitrage de fenêtre de 2,5 à 10 N/25 mm.

15. Tissu selon l'une des revendications 1 à 14, caractérisé en ce qu'il peut être désolidarisé du substrat à coller avec un résidu inférieur à 0,1% par 625 mm² de degré de recouvrement de surface de la surface collée, le substrat à coller étant un vitrage de fenêtre ou en plexiglas ou de l'acier.

16. Procédé de fabrication d'un tissu selon l'une des revendications 1 à 15, caractérisé en ce que le substrat est revêtu d'un adhésif à fusion par impression en taille douce-héliogravure, sérigraphie ou flexographie.

17. Utilisation d'un tissu flexible selon l'une des revendications 1 à 15 sous la forme d'étiquettes auto-adhésives, d'aides au montage, de gabarits d'écriture, de papier photographique, de formulaires, de textiles ; sous la forme de notices adhésives, de bandes auto-adhésives, d'enveloppes, de feuilles de protection, de revêtements, de plâtre médical et serviettes hygieniques.

18. Utilisation selon la revendication 17, les étiquettes auto-adhésives étant des étiquettes de traitement de l'information, d'affranchissement, de bureau, d'indication de prix, de caractérisation, d'équipement de produit, de promotion, de décoration, de gestion, de fermeture et indicatrices.

19. Utilisation selon la revendication 17, les étiquettes auto-adhésives étant des rubans pour utilisation en bureautique, domestique, d'emballage, d'isolation en bandes de recouvrement, des rubans de transfert et des rubans en substances alvéolaires.
